(19) Europäisches Patentamt
European Patent Office
Office européen des brevets

(11) Numéro de publication : **0 449 689 A1**

# (12) DEMANDE DE BREVET EUROPEEN

(21) Numéro de dépôt : **91400652.3**

(22) Date de dépôt : **08.03.91**

(51) Int. Cl.[5] : **C07F 9/09**, C08K 5/521, C07F 9/6574, C08K 5/527

(30) Priorité : **26.03.90 FR 9003806**

(43) Date de publication de la demande : **02.10.91 Bulletin 91/40**

(84) Etats contractants désignés : **AT BE CH DE DK ES FR GB GR IT LI LU NL SE**

(71) Demandeur : **ATOCHEM**
**4 & 8, Cours Michelet La Défense 10**
**F-92800 Puteaux (FR)**

(72) Inventeur : **Gandi, Seghaier**
**6/407, rue du Barreau**
**F-59650 Villeneuve d'Ascq (FR)**
Inventeur : **Delfosse, Lucien**
**4, rue des Perdrix**
**F-68110 Illzach (FR)**

## (54) Compositions polymères ignifugées, leur procédé de fabrication et leur application à l'obtention d'articles industriels ignifugés.

(57) L'invention porte sur un composé de phosphore des formules (I) à (VI) et sur un additif d'ignifugation des polymères constitué essentiellement (A) d'au moins un composé précité et/ou d'au moins un composé du phosphore obtenu par réaction du pentoxyde de phosphore avec un alcool contenant au moins deux fonctions OH, et, pour 100 parties en poids (pp) du composé (A), (B) 0-500 pp d'au moins une résine formoparacrésolique (VII) et (C) 0-1 pp d'hydrogénocarbonate de sodium.

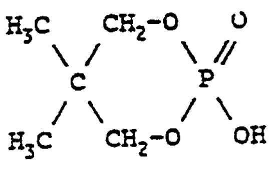

(I)

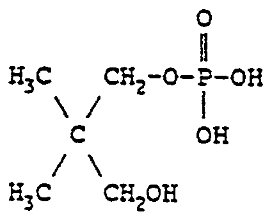

(II)

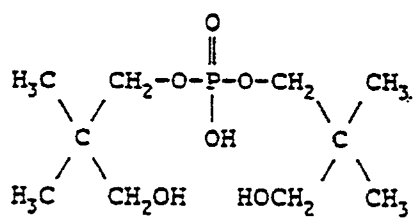

(III)

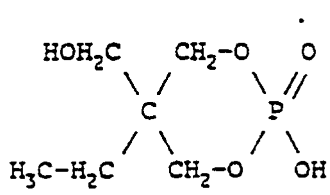

(IV)

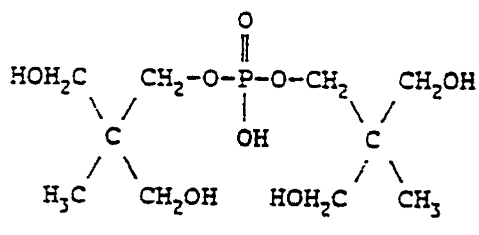

(V)

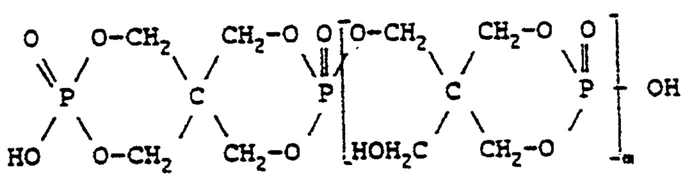

(VI)

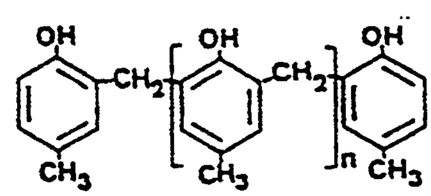

(VII)

EP 0 449 689 A1

$m$ et $n$ = entiers de 1 à 10

La présente invention se rapporte à des compositions ignifugées à base de polymères oléfiniques et vinylaromatiques, à leur fabrication et à des articles industriels obtenus par transformation desdites compositions.

L'ignifugation des macromolécules est une propriété recherchée activement par les industriels pour des raisons évidentes d'économie et de conformité des produits avec la législation, surtout si ces derniers sont bien destinés à devenir partie intégrante de constructions ou bien encore à intervenir comme matière première pour l'industrie textile ou celle des transports, etc...

En effet, les matières plastiques présentent souvent une faible résistance au feu. Lors d'un incendie, elles posent des problèmes majeurs dûs à la formation des fumées parfois très opaques et au dégagement des gaz toxiques dont certains sont plus nuisibles que le feu lui-même.

Ce défaut tend pour l'instant à limiter leur développement dans l'industrie et leurs utilisations dans la construction du bâtiment, l'ameublement, etc...

Le but de l'ignifugation est d'arriver à ce que ces matériaux ne propagent pas cette flamme accidentelle.

Plusieurs facteurs interviennent afin d'obtenir une meilleure ignifugation. Les principaux sont les suivants :

- le type d'additifs (halogénés, azotes, phosphorés, etc...),
- la compatibilité de l'additif avec la macromolécule à ignifuger,
- l'homogénéité et l'aspect final du matériau,
- le rapport de l'efficacité de l'ignifuge sur le taux d'additif.

Parmi les macromolécules, qui présentent un intérêt industriel particulier, les polyoléfines (notamment le polyéthylène) et les polymères vinylaromatiques ont une place de choix.

Le polyéthylène possédant une très faible résistance au feu (son indice d'oxygène limite déterminé selon la norme ASTM D-2803 est égal à 18 environ), son ignifugation représente un problème crucial. Diverses solutions ont déjà été proposées pour le résoudre. Ainsi il est connu, notamment dans l'application à la fabrication de câbles électriques, d'incorporer au polyéthylène de fortes proportions d'hydroxydes d'aluminium ou de magnésium. Ces fortes proportions ont pour effet de diminuer les propriétés mécaniques du polyéthylène et par conséquent de limiter son emploi dans un certain nombre d'applications. Il est également connu d'utiliser comme additifs ignifugeants des dérivés bromés tels que l'éther de diphényle bromé. Toutefois ceux-ci ont tendance, au-delà d'une température de 600°C, à former des dérivés de la dioxine et du benzofurane bromé dont certains sont hautement toxiques. Il en va de même de certaines molécules combinant les atomes d'halogène et de phosphore telles que le tétrakis(2-chloroéthyl)éthylène diphosphate.

Par ailleurs le rôle avantageux de composés phosphorés dans l'ignifugation des matières plastiques est attribué à la formation, sous l'action d'une flamme, d'une croûte charbonneuse qui brûle mal, formant ainsi une couche superficielle enveloppant le matériau et intervenant comme barrière à l'accès de l'oxygène. Ainsi G. Camino et al. ont décrit dans Polym. Degrad. 7, 25-31 (1984) et Polym. Degrad. Stab. 12, 203 (1985) l'utilisation de 15 à 30% en poids dans le polypropylène d'un mélange de polyphosphate d'ammonium et de pentaérythritol. Toutefois un tel mélange ne donne pas satisfaction, surtout lorsqu'on cherche à l'appliquer à l'ignifugation des polymères à base d'éthylène, vis-à-vis de l'ensemble des conditions que l'on souhaite remplir pour résoudre un tel problème : indice d'oxygène limite, perte de poids à une température donnée, vitesse de propagation de la flamme et température d'autoinflammation. En effet il est bien connu que les polymères à base d'éthylène sont parmi les plus difficiles à ignifuger : ainsi L. COSTA et G. CAMINO ont montré dans Polymer Degradation and Stability (1985) 12, 127 que l'addition de 30% en poids d'un même retardateur de flamme à un polymère se traduit par une augmentation de l'indice d'oxygène limite de 5,5 points pour un polymère de styrène, de 10 points pour un polymère de propylène mais de 4 points seulement pour un polymère d'éthylène. C'est pourquoi il a été proposé d'autres moyens pour améliorer le retard de flamme par intumescence par combinaison des atomes d'azote et de phosphore. En particulier Y. HALPERN et al. dans Ind. Eng. Chem. Prod. Res. Dev. (1984) 23, 233-238 ont développé le concept d'améliorer la stabilité thermique du retardateur de flamme intumescent en synthétisant des molécules bien définies à partir des trois ingrédients nécessaires - acide phosphorique, polyol et composé azoté - au lieu des mélanges indéfinis connus jusqu'à ce moment. A titre d'exemple ils ont préparé, à partir de l'oxychlorure de phosphore et de pentaérythritol, le 3,9-bis (chloro)-2,4,8,10-tétraoxa-3,9-diphosphaspiro[5.5]undécane-3,9-dioxyde. Ce produit est ensuite hydrolysé puis soumis à réaction avec la mélamine pour former le sel de dimélamine du spiro acide, lequel permet de porter l'indice d'oxygène du polypropylène à 27 lorsqu'il est mélangé à ce dernier à raison de 20% en poids.

Cette synthèse présente l'inconvénient de nécessiter de nombreuses étapes de purification des différents produits intermédiaires et, en raison du caractère très exothermique de la réaction de l'oxychlorure de phosphore sur le pentaérythritol, d'exiger des précautions opératoires accrues.

Le problème que la présente invention vise à résoudre consiste à mettre au point un additif d'ignifugation des polymères, plus particulièrement des polymères à base d'éthylène, possédant les caractéristiques suivantes :

- stable thermiquement à la température de mise en oeuvre du polymère,

– procure un haut degré de retard de flamme déjà lorsqu'il est employé en faibles proportions,
– ne cause pas un dégagement important de fumée au moment de la combustion,
– ne dégrade pas sensiblement les propriétés physiques, notamment mécaniques, du polymère,
– ne dégage pas de substances toxiques au moment de la combustion, et
– peu onéreux en raison de la simplicité de son mode de fabrication.

La présente invention est basée sur la découverte que ce problème peut être résolu en associant au polymère un additif d'ignifugation constitué essentiellement de :

(A) au moins un composé de phosphore choisi parmi les produits de réaction du pentoxyde de phosphore avec un alcool contenant au moins deux fonctions hydroxyles et les composés de formules :

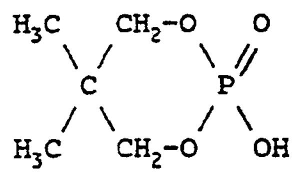
(I),

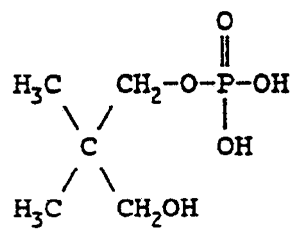
(II),

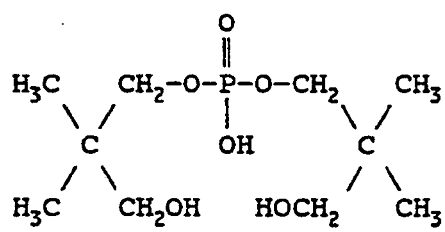
(III),

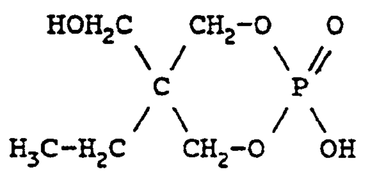
(IV),

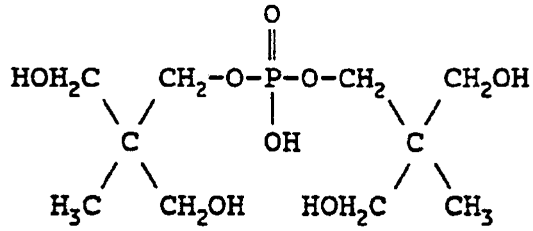
(V), et

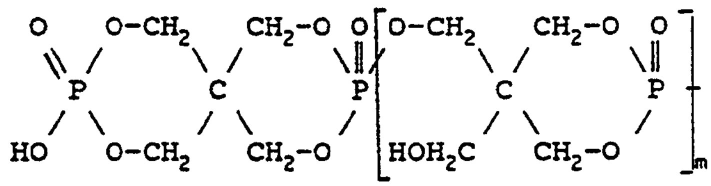 (VI)

dans laquelle m est un nombre entier de 1 à 10, et pour 100 parties en poids du composé (A),

(B) de 0 à 500 parties environ en poids d'au moins une résine formoparacrésolique de formule :

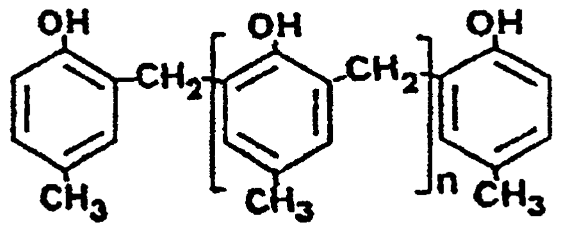 (VII)

dans laquelle n est un nombre entier de 1 à 10, et

(C) de 0 à 1 partie environ en poids d'hydrogénocarbonate de sodium.

Le composé (A) constitue le principal principe actif de l'additif d'ignifugation selon l'invention. Ce composé est notamment obtenu par réaction du pentoxyde de phosphore $P_2O_5$ (ou $P_4O_{10}$) avec un alcool contenant au moins deux fonctions hydroxyles, c'est-à-dire un diol, un triol ou de manière plus générale un polyol. Comme alcool avec lequel on fait réagir le pentoxyde de phosphore on peut citer par exemple les alkylèneglycols tels que l'éthylèneglycol, le diéthylèneglycol, le triéthylèneglycol, le propylèneglycol, le dipropylèneglycol, le tripropylèneglycol, les alcanediols portant de préférence les radicaux hydroxyle en $\alpha,\omega$ comme le 1,4-butanediol, le 2,2-diméthyl-1,3-propanediol, le 2-éthyl-2-méthyl-1,3-propanediol, le 1,6-hexanediol, le 1,4-cyclohexanediméthanol, ainsi que les polyéthylène glycols ayant un poids moléculaire allant jusqu'à 1000 environ, le 1,3-butanediol, le néopentylglycol, le 1,4-cyclohexanediol, le 2,2,4-triméthyl-1,3-pentanediol, le 2-éthyl-2-méthyl-1,3-propanediol, le 2,2-diéthyl-1,3-propanediol, le triméthyloléthane, le triméthylolpropane, le glycérol, le pentaérythritol, le dipentaérythritol et les polyols mono- ou polyéthoxylés ou mono- ou polypropoxylés. On peut citer également les alcools polyvinyliques, notamment ceux obtenus par exemple par hydrolyse d'un copolymère éthylène/acétate de vinyle.

La préparation d'un composé (A) par réaction du pentoxyde de phosphore avec un diol, triol ou polyol s'effectue généralement à reflux, par exemple à une température de 120° à 180°C environ (sous pression atmosphérique) et pendant une durée de 1 à 20 heures environ, de préférence sous agitation et en présence d'une amine tertiaire. Le rapport molaire à observer entre le diol, triol ou polyol d'une part et le pentoxyde de phosphore d'autre part dépend de la nature du polyol et en particulier du nombre de fonctions hydroxyles contenues dans l'alcool. Ainsi on utilise de préférence au moins 3 moles de diol pour une mole de $P_2O_5$, au moins 2 moles de triol pour une mole de $P_2O_5$ et au moins 1 mole de polyol pour une mole de $P_2O_5$ lorsque le polyol contient au moins 4 fonctions hydroxyles. Le pentoxyde de phosphore utilisé pour la réaction selon l'invention est de préférence pur. Pour contrôler l'exothermicité de la réaction, on peut éventuellement utiliser de l'acide polyphosphorique contenant au moins 80% de pentoxyde de phosphore. La réaction procède généralement avec un rendement d'au moins 70% et conduit à un produit, ou un mélange de produits, ayant un point de fusion (ramollissement) généralement compris entre 200° et 250°C environ. Ce produit, ou mélange de produits, peut être isolé du milieu réactionnel en éliminant l'amine tertiaire éventuellement en excès par évaporation sous vide, puis en procédant à un traitement basique et/ou acide, puis à une évaporation de l'eau sous vide avant de laver au moins une fois au moyen d'éther et de sécher, éventuellement sous pression.

L'utilisation de certains diols, triols ou polyols pour la réaction avec le pentoxyde de phosphore conduit à des molécules, ou mélanges de molécules, bien définies de formules (I) à (VI), selon les indications du Tableau I ci-après.

TABLEAU I

| Polyol de départ | Composé(s) (A) obtenus |
|---|---|
| 2,2-diméthyl-1,3-propanediol | (I), (II), (III) |
| 1,1,1-(trishydroxyméthyl))éthane | (IV), (V) |
| pentaérythritol | (VI) |

Ces molécules de formules (I) à (VI) ont été identifiées par leur spectres de résonance magnétique nucléaire.

Le composé (A) peut être associé à une résine formoparacrésolique de formule (VII), oligomère à chaîne linéaire de type résine novolaque dont la synthèse par réaction exothermique, en milieu acide, du paracrésol sur le formaldéhyde est bien connue. Du point de vue de l'efficacité du système en tant qu'additif d'ignifugation des polymères, il n'est généralement pas souhaitable que la proportion de résine formoparacrésolique dépasse 5 parties environ en poids pour une partie de composé (A).

Le composé (A) peut en outre être associé à de l'hydrogénocarbonate de sodium jouant ici la fonction d'agent de gonflement susceptible de favoriser la formation d'une croûte charbonneuse cellulaire au détriment de l'apparition de matières volatiles. Du point de vue de l'efficacité du système pour l'ignifugation des polymères, il n'est généralement pas souhaitable que la proportion d'hydrogénocarbonate de sodium dépasse 1 partie environ en poids pour 100 parties de composé (A).

L'additif d'ignifugation préconisé par la présente invention procure une bonne efficacité pour la plupart des polymères et notamment pour les polymères à base d'éthylène sans qu'il soit nécessaire de lui adjoindre, comme cela est fait dans l'art antérieur rappelé précédemment, un composé azoté. Par "constitué essentiellement de" dans la description précédente de l'additif d'ignifugation selon l'invention, on entend donc que celui-ci est substantiellement exempt de composés azotés autres que ceux ayant pu intervenir en tant qu'impuretés au cours de sa synthèse.

Un autre aspect de la présente invention concerne des compositions polymères ignifugées caractérisées en ce qu'elles contiennent au moins un additif d'ignifugation tel que décrit précédemment. Pour une ignifugation correspondant à la majorité des applications visées, il est souhaitable que les compositions selon l'invention contiennent jusqu'à 40% en poids environ, de préférence de 15 à 35% en poids environ, de l'additif d'ignifugation. En dessous d'une proportion de 15% en poids environ, l'action ignifugeante est le plus souvent insuffisante et ne dépasse pas celle pouvant être obtenue par les systèmes connus. Au dessus d'une proportion de 35% en poids environ, l'action ignifugeante cesse d'augmenter et peut même dans certains cas diminuer tout en renchérissant la composition globale et tout en diminuant certaines de ses propriétés physiques, notamment mécaniques.

Les polymères pouvant entrer dans la constitution des compositions ignifugées selon l'invention sont notamment le polystyrène et les copolymères de styrène et d'un comonomère choisi parmi l'acide méthacrylique, l'anhydride maléique et les maléimides, le polypropylène isotactique, le polybutène-1 et les copolymères cristallins comprenant au moins 85% en moles de propylène et au plus 15% en moles d'éthylène ou d'une α-oléfine possédant de 4 à 12 atomes de carbone. Mais c'est dans le domaine des polymères à base d'éthylène que la présente invention trouve son application la plus avantageuse. Parmi les polymères à base d'éthylène pouvant entrer dans la constitution des compositions ignifugées selon l'invention on peut citer :

– les copolymères éthylène/ester d'acide insaturé, ledit acide présentant de préférence une insaturation éthylénique adjacente au groupe carboxylique. L'acide insaturé est de préférence un mono-acide tel que l'acide acrylique, l'acide méthacrylique, l'acide crotonique ou l'acide cinnamique. Il peut également s'agir d'un diacide tel que l'acide maléique, l'acide fumarique, l'acide citraconique, l'acide glutaconique ou l'acide muconique. Dans le cas des diacides, l'ester d'acide insaturé peut être un mono-ester ou, de préférence, un diester. L'alcool duquel dérive l'ester d'acide insaturé comprend de préférence de 1 à 8 atomes de carbone. Le groupe estérifiant peut être linéaire ou ramifié, tel que par exemple méthyle, éthyle, n-propyle, isopropyle, n-butyle, isobutyle, tertiobutyle, isoamyle, n-hexyle, 2-éthylhexyle ou isooctyle. De tels copolymères peuvent, outre les motifs dérivés de l'éthylène et ceux dérivés de l'ester d'acide insaturé, comprendre des motifs dérivés

. d'un anhydride d'acide dicarboxylique insaturé, ceux-ci pouvant être présents en une proportion allant jusqu'à 3% environ en moles dans le copolymère. L'anhydride présent peut être choisi parmi l'anhydride

citraconique, l'anhydride itaconique, l'anhydride tétrahydrophtalique et, de préférence, l'anhydride maléique ;

. d'un monomère glycidylique insaturé, ceux-ci pouvant être présents en une proportion allant jusqu'à 18% environ en moles dans le copolymère. Le monomère glycidylique peut être choisi notamment parmi méthacrylate et acrylate de glycidyle, itaconate de mono- et diglycidyle, butènetricarboxylate de mono-, diet triglycidyle ;

. d'un N-carboxyalkylimide d'acide dicarboxylique insaturé, ceux-ci pouvant être présents en une proportion allant jusqu'à 3% environ en moles dans le copolymère. Un tel copolymère est obtenu en faisant réagir à une température comprise entre 150°C et 300°C un acide aminoalkylcarboxylique sur un terpolymère éthylène/ester d'acide insaturé/anhydride d'acide dicarboxylique insaturé ;

. d'un polyacrylate ou polyméthacrylate de polyol, ceux-ci pouvant être présents en une proportion allant jusqu'à 0,4% environ en moles dans le copolymère. Par poly(méth)acrylate de polyol entrant dans la constitution de tels copolymères, on entend tout composé dérivant d'un polyol et comprenant au moins deux fonctions esters obtenues par estérification au moins partielle dudit polyol au moyen d'acide acrylique ou méthacrylique. Il peut s'agir d'un (di)méthacrylate de diol, triol, tétrol, etc., d'un tri(méth)acrylate de triol, tétrol, etc., d'un tétra(méth)acrylate d'un polyol ayant au moins 4 fonctions alcool. On peut citer les diacrylates et diméthacrylates de l'éthylèneglycol, du propylèneglycol, du 1,3-butanediol, du 1,4-butanediol, du 1,6-hexanediol, du néopentylglycol, du 1,4-cyclohexanediol, du 1,4-cyclo-hexanediméthanol, du 2,2,4-triméthyl-1,3-pentanediol, du 2-éthyl-2-méthyl-1,3-propanediol, du 2,2-diéthyl-1,3-propanediol, du diéthylèneglycol, du dipropylèneglycol, du triéthylèneglycol, du tripropylèneglycol, du tétraéthylèneglycol, du tétrapropylèneglycol, du triméthyloléthane, du triméthylolpropane, du glycérol, du pentaérythritol, les triacrylates et triméthacrylates du triméthyloléthane, du triméthylolpropane, du glycérol, du pentaérythritol, les tétraacrylates et tétraméthacrylates du pentaérythritol, les di(méth)acrylates à hexa(méth)acrylates du dipentaérythritol, les poly(méth)acrylates de polyols mono- ou polyéthoxylés ou mono- ou polypropoxylés tels le triacrylate et le triméthacrylate du triméthylolpropane triéthoxylé, du triméthylolpropane tripropoxylé ; le triacrylate et le triméthacrylate du glycérol tripropoxylé ; le triacrylate, le triméthacrylate, le tétraacrylate et le tétraméthacrylate du pentaérythritol tétraéthoxylé ;

– un polymère ou copolymère de l'éthylène de cristallinité supérieure à 30% comme par exemple le polyéthylène haute densité (0,96 à 0,97 environ), le polyéthylène basse densité radicalaire (0,92 à 0,93 environ) et les copolymères d'éthylène et d'au moins une α-oléfine possédant de 3 à 8 atomes de carbone ayant une densité de 0,91 à 0,95 environ ;

– les copolymères d'éthylène et d'au moins un ester vinylique d'acide carboxylique saturé ayant 2 à 6 atomes de carbone tel que l'acétate de vinyle ou le propionate de vinyle ;

– les copolymères d'éthylène et d'au moins une α-oléfine ayant de 3 à 8 atomes de carbone dont la cristallinité ne dépasse pas 30%, tels que :

. ceux de densité comprise entre 0,905 et 0,910 environ, conformes au brevet européen n° 070 220,

. ceux de densité comprise entre 0,890 et 0,905 environ, contenant généralement de 6 à 10% en moles d'α-oléfine, et

. ceux de densité comprise entre 0,860 et 0,890 environ, parmi lesquels notamment :

a) des caoutchoucs polyoléfiniques commercialisés par la société MITSUI sous la marque TAFMER®, consistant en des copolymères de 78 à 92% en moles d'éthylène et de 8 à 22% en moles d'une α-oléfine choisie parmi le propylène et le butène-1, ayant une densité de 0,860 à 0,890, ayant un taux de cristallinité résiduelle de 1 à 14%, une température de fusion cristalline J de 75°C, possédant une masse moléculaire géométrique moyenne de 60 à 120 kg/mole et un indice de polydispersité compris entre 2,2 et 2,7 ;

b) des caoutchoucs polyoléfiniques commercialisés par la société MONTEDISON sous la marque DUTRAL®, consistant en des copolymères de 65 à 80% en moles d'éthylène et de 20 à 35% en moles de propylène, ayant une densité de 0,850 à 0,870, ne possédant aucune cristallinité résiduelle et donc pas de température de fusion cristalline, possédant une masse moléculaire géométrique moyenne de 90 à 100 kg/mole et un indice de polydispersité compris entre 2,2 et 2,9 ;

c) des caoutchoucs polyoléfiniques consistant en des copolymères éthylène/propylène et/ou butène-1, ayant un indice de fluidité compris entre 0,3 et 15 dg/min. environ et une densité comprise entre 0,865 et 0,885 environ, comprenant de 77 à 91% en moles de motifs dérivés de l'éthylène et de 9 à 23% en moles de motifs dérivés du propylène et/ou du butène-1, caractérisés par une température de fusion cristalline J comprise entre 100° et 125°C environ. Subsidiairement, ces caoutchoucs polyoléfiniques selon l'invention peuvent être caractérisés par au moins l'un des éléments suivants :

– un indice de polydispersité compris entre 3,5 et 15 environ, de préférence, entre 4 et 8 environ,
– une masse moléculaire géométrique moyenne (définie comme indiqué ci-après) comprise entre 35 et 70 kg/ mole environ,
– une relation entre la densité d et la teneur x (exprimée en % en moles) en motifs dérivés du propylène et du butène-1 qui se traduit par la double équation :

$$0{,}9084 \leqq d + 0{,}002\,x \leqq 0{,}918$$

– un taux de cristallinité résiduelle (déterminé selon la méthode décrite ci-après) compris entre 3 et 15% environ.

Par température de fusion cristalline J, on entend la température déterminée au maximum de la courbe de fusion après cristallisation obtenue en soumettant l'échantillon de copolymère au processus en trois étapes suivant :

– fusion à la vitesse de 8°C par minute depuis 10°C jusqu'à 150°C, puis
– cristallisation à la vitesse de 8°C par minute depuis 150°C jusqu'à 10°C, puis à nouveau
– fusion à la vitesse de 8°C par minute depuis 10°C jusqu'à 150°C.

Le taux de cristallinité résiduelle est déterminé par diffraction des rayons X sur un échantillon de copolymère ayant subi un refroidissement à la vitesse de 5°C par heure depuis 190°C jusqu'à la température ambiante. La masse moléculaire géométrique moyenne est définie par la relation mathématique :

$$\log_{10} Mg = \sum_{i=1}^{i=N} W_i \log_{10} M_i$$

où $W_i$ est la fraction en poids de matière de masse $M_i$ et N est le nombre de fractions éluées par chromatographie sur gel perméable.

Les compositions ignifugées selon l'invention peuvent être préparées en effectuant d'abord la réaction du pentoxyde de phosphore avec un alcool contenant au moins deux fonctions hydroxyles, ou bien la préparation d'un composé de formule (I) à (VI), puis en mélangeant le cas échéant ce composé ou le produit de cette réaction avec une résine formoparacrésolique (B) et/ou l'hydrogénocarbonate de sodium (C), et enfin en incorporant ce produit de réaction, composé ou mélangé au polymère de manière à former un mélange aussi homogène que possible. Toutefois cette première méthode, outre l'inconvénient de nécessiter une succession de trois étapes, ne s'est pas montrée aussi avantageuse, du point de vue des propriétés d'ignifugation telles que notamment l'indice d'oxygène limite de la composition résultante, que la seconde méthode qui sera maintenant décrite en détail et qui constitue le procédé préféré de préparation des compositions selon l'invention.

Ce procédé préféré consiste à mélanger simultanément, sous atmosphère de gaz inerte, la polyoléfine, le pentoxyde de phosphore, l'alcool contenant au moins deux fonctions hydroxyles et, le cas échéant, la résine formoparacrésolique (B) et/ou l'hydrogénocarbonate de sodium (C), dans un appareil de malaxage à une température au moins égale à la température de fusion de chacun des ingrédients organiques du mélange mais inférieure à la température de décomposition de l'hydrogénocarbonate de sodium et insuffisante pour causer la dégradation pyrolytique du polymère et pendant une durée suffisante pour réaliser "in situ" la réaction entre le pentoxyde de phosphore et l'alcool. Comme on le conçoit aisément, la température de préparation dépend donc de manière importante de la nature précise de tous les ingrédients du mélange mais en premier lieu de la nature du polymère et de sa plus ou moins grande aptitude à la dégradation pyrolytique. Dans le cas des polymères à base d'éthylène tels qu'ils viennent d'être décrits, une température de 180° à 250°C environ est généralement recommandée. La durée de la préparation dépend non seulement de la température mais aussi de l'efficacité du mélange dans l'appareil de malaxage et de la nature de l'alcool. Une durée de 8 à 60 minutes environ, de préférence 12 à 25 minutes, est généralement recommandée. Comme gaz inerte on peut utiliser un gaz rare tel que l'hélium ou l'argon ou bien, de façon plus simple, l'azote. Comme appareil de malaxage on peut utiliser un malaxeur Brabender, une extrudeuse mono-vis ou bis-vis, etc.

L'étude et la caractérisation, par les techniques de résonance magnétique nucléaire du proton, du carbone 13 et du phosphore 31, ainsi que par la spectrométrie infrarouge à transformée de Fourier, des compositions obtenues par le procédé préféré selon l'invention montrent que l'additif formé au cours de la préparation n'a pas formé de liaisons privilégiées avec le polymére d'éthylène lors de l'incorporation. L'étude thermogravimétrique montre qu'à partir d'un polyéthylène dont la réaction de décomposition est déjà avancée de 20% à 400°C et qui disparaît totalement à 500°C sans laisser aucun résidu, on peut préparer une composition ignifugée selon l'invention dont le taux de décomposition n'est plus de 10% à 400°C et qui laisse à 600°C un résidu charbonneux équivalent, déduction faite du résidu laissé par l'alcool et le pentoxyde de phosphore, à 14% de la masse initiale. Cette constatation peut s'interpréter par la formation, probablement à partir d'une température de 350°C

environ, d'un polymère d'éthylène comportant des motifs dans lesquels l'atome de phosphore du produit de réaction du pentoxyde de phosphore avec l'alcool est lié directement à un atome de carbone de la chaîne macromoléculaire principale. La formule de ces motifs serait la suivante :

1°)

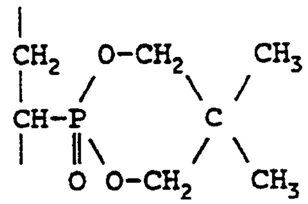

(VIII)

dans le cas d'un composé (A) de formule (I),

2°)

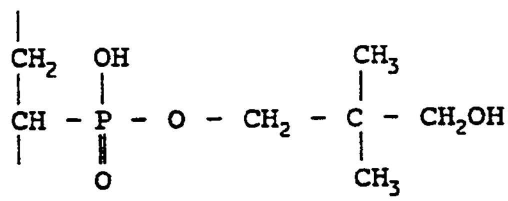

(IX)

dans le cas d'un composé (A) de formule (II),

17

3°)

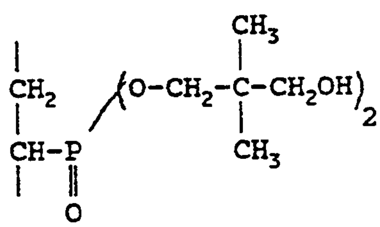

(X)

dans le cas d'un composé (A) de formule (III),

4°)

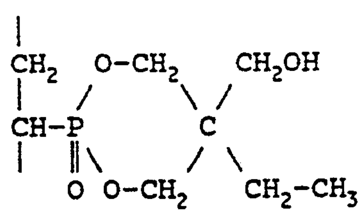

(XI)

dans le cas d'un composé (A) de formule (IV),

5°)

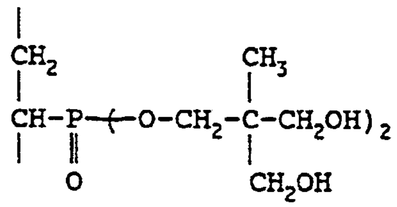

(XII)

dans le cas d'un composé (A) de formule (V) et

6°)

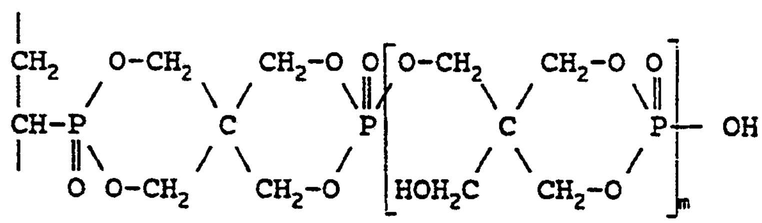

(XIII)

dans laquelle m est un nombre entier de 1 à 10, dans le cas d'un composé (A) de formule (XI).

Un dernier aspect de la présente invention consiste en des articles industriels ignifugés obtenus par transformation d'une composition polymère telle que décrite précédemment.

Ladite transformation peut s'effectuer par les techniques habituelles pour les polyoléfines, telles que l'extrusion-soufflage, l'extrusion, l'injection, le moulage, etc. et permet d'obtenir des articles industriels variés tels que films, revêtements de câbles, joncs, tubes, tuyaux, profilés, etc.

Les exemples non limitatifs ci-après ont pour but d'illustrer l'invention. Sauf précision contraire, toutes les quantités sont exprimées en poids.

## EXEMPLE 1

Dans un ballon à trois cols de 500 ml muni d'un système d'agitation magnétique et d'un refroidissement à reflux, plongé dans un bain d'huile, on met 12 g d'acide polyphosphorique (contenant 85% de pentoxyde de phosphore) et 35 g de triéthylamine. Après avoir chauffé à 145°C on ajoute 0,33 mole de 2,2-diméthyl-1,3-propanediol et on laisse réagir pendant 15 heures. Le contenu du ballon est ensuite évaporé sous vide pour éliminer l'amine en excès. On procède ensuite à un traitement basique puis un traitement acide, puis à une évaporation sous vide pour éliminer l'eau. On lave enfin plusieurs fois à l'éther puis on sèche à l'étuve sous pression à 100°C. Le produit de la réaction, obtenu avec un rendement de 70%, possède un point de ramollissement (mesuré en tube capillaire à l'aide d'un appareil BUCHI SMP 20) égal à 210°C. Il a ensuite été caractérisé :

– par résonance magnétique nucléaire du phosphore 31 à l'aide d'un appareil BRUCKER WP 80, la référence correspondant au signal du phosphore de l'acide phosphorique 85% contenu dans un tube plongeant dans le chloroforme deutérisé, et le spectre étant réalisé en découplage total du proton ;

– par spectrométrie de masse à l'aide d'un appareil KRAVOS CONCEPT II HH : une cible chargée du produit à analyser dans le glycérol comme matrice est soumise à un bombardement par atomes rapides (Xe, 8 kV) puis les ions positifs ou négatifs sont analysés.

Ces techniques de caractérisation permettent d'identifier le produit de la réaction comme un mélange des composés de formules (I), (II) et (III) eux-mêmes caractérisés par les données spectrométriques figurant au Tableau II ci-après.

## EXEMPLE 2

On reproduit la procédure expérimentale de l'Exemple 1 en remplaçant le diol par 30 g de 1,1,1-(trishydroxyméthyl)éthane. Le produit de la réaction, obtenu avec un rendement de 82%, possède un point de ramollissement (mesuré comme à l'Exemple 1) égal à 220°C. Sa caractérisation par les techniques décrites à l'Exemple 1 permet de l'identifier comme un mélange de composés de formules (IV) et (V) eux-mêmes caractérisés par les données spectrométriques figurant au Tableau II ci-après.

EXEMPLE 3

On reproduit la procédure expérimentale de l'Exemple 1 en remplaçant le diol par 15 g de pentaérythritol. Le produit de la réaction, obtenu avec un rendement de 90%, possède un point de ramollissement (mesuré comme à l'Exemple 1) égal à 240°C. Sa caractérisation par les techniques décrites à l'Exemple 1 permet de l'identifier comme un mélange de 3,9-bis(hydroxy)-2,4,8,10-tétraoxa-3,9-diphosphaspiro[5.5]undécane-3,9-dioxyde et de composé de formule (VI), celui-ci étant caractérisé par les données spectrométriques figurant au Tableau II ci-après.

TABLEAU II

| Composé | RMN $P^{31}$ (ppm) | Spectre de masse |
|---|---|---|
| I | 6,49 | 165 |
| II | -3,14 | 183 |
| III | 5,95 | 269 |
| IV | -5,64 | 148 |
| V | -2,93 | 249 |
| VI | -5,36 ; -0,62 | |

EXEMPLES 4 à 7

On considère un polymère d'éthylène ayant un indice de fluidité (déterminé selon la norme ASTM D-1238) de 20 dg/min. et une densité de 0,917. On mélange par malaxage sur malaxeur Brabender sous gaz inerte à 200°C pendant 15 minutes, 70 parties en poids de ce polymère et 30 parties en poids d'un produit préparé à l'un des Exemples 1 à 3, sauf dans le cas de l'Exemple 4 qui sert de témoin, puis on mesure l'indice d'oxygène limite (I.O.L) de la formulation conformément à la norme ASTM D-2803 ainsi que, par analyse thermogravimétrique (au moyen d'une thermobalance NETZSCH ST 409 avec un débit d'air de 3 litres/heure et une vitesse de chauffe de 10°C par minute) le taux de résidu à 650°C exprimé en pourcentage. La formulation de l'Exemple 5 est préparée à partir du produit de l'Exemple 1, celle de l'Exemple 6 à partir du produit de l'Exemple 2 et celle de l'Exemple 7 à partir du produit de l'Exemple 3. Les résultats sont rassemblés au Tableau III ci-après.

EXEMPLE 8 (Comparatif)

On considère un mélange de 70 parties en poids du polymère de l'Exemple 4 et de 30 parties en poids d'une résine formoparacrésolique de formule (VII). L'indice d'oxygène limite et le taux de résidu à 650°C de cette formulation, déterminé selon la norme ASTM D-2803, est indiqué au Tableau III ci-après.

EXEMPLES 9 à 11

On considère un mélange de 70 parties en poids du polymère de l'Exemple 4, 8 parties en poids de la résine formoparacrésolique de l'Exemple 8 et 22 parties en poids d'un produit préparé à l'un des Exemples 1 à 3. On mesure l'indice d'oxygène limite et le taux de résidu à 650°C de ces formulations comme aux exemples précédents. La formulation de l'Exemple 9 est préparée à partir du produit de l'Exemple 1, celle de l'Exemple 10 à partir du produit de l'Exemple 2 et celle de l'Exemple 11 à partir du produit de l'Exemple 3. Les résultats sont rassemblés au Tableau III ci-après.

TABLEAU III

| Exemple | I.O.L | Résidu à 650°C (%) |
|---|---|---|
| 4 | 18 | 0 |
| 5 | 22 | 24 |
| 6. | 22,8 | 25 |
| 7 | 23,5 | 30 |
| 8 | 23 | 7 |
| 9 | 24,3 | 21 |
| 10 | 24,7 | 23 |
| 11 | 25,5 | 30 |

EXEMPLE 12

Dans un malaxeur Brabender on mélange à 200°C, sous atmosphère d'azote pendant 15 minutes :

- 70 parties en poids du polymère de l'Exemple 4,
- 10 parties en poids de pentoxyde de phosphore $P_2O_5$ pur, et
- 20 parties en poids de pentaérythritol.

L'indice d'oxygène limite (I.O.L) de cette formulation est mesuré coriformément à la norme ASTM D-2803 et reporté dans le Tableau IV ci-après.

EXEMPLE 13

Dans un malaxeur Brabender on mélange à 200°C, sous atmosphère d'azote pendant 20 minutes :

- 76 parties en poids du polymère de l'Exemple 4,
- 16 parties en poids de 2,2-diméthyl-1,3-propanediol, et
- 8 parties en poids de pentoxyde de phosphore $P_2O_5$ pur.

L'indice d'oxygène limite de cette formulation, mesuré comme précédemment, est reporté au Tableau IV ci-après.

EXEMPLE 14

On procède comme à l'Exemple 13 mais en remplaçant le 2,3-diméthyl-1,3-propanediol par le 1,1,1-(trishydroxyméthyl)éthane. L'indice d'oxygène limite de cette formulation, mesuré comme précédemment, est reporté au Tableau IV ci-après.

EXEMPLE 15

Dans un malaxeur Brabender on mélange à 200°C, sous atmosphère d'azote pendant 20 minutes :

- 75 parties en poids du polymère de l'Exemple 4,
- 18,7 parties en poids d'un copolymère éthylène/acétate de vinyle ayant une teneur molaire de 30% en éthylène, partiellement hydrolysé, commercialisé par la société SOLVAY sous la dénomination CLARENE L, et
- 6,3 parties en poids de pentoxyde de phosphore $P_2O_5$ pur.

L'indice d'oxygène limite de cette formulation, mesuré comme précédemment, est reporté au Tableau IV ci-après.

TABLEAU IV

| Exemple | 12 | 13 | 14 | 15 | 16 | 17 | 18 | 19 |
|---|---|---|---|---|---|---|---|---|
| I.O.L. | 27 | 23 | 23,5 | 28 | 28 | 25,2 | 29,5 | 30 |

EXEMPLE 16

Dans un malaxeur Brabender on mélange à 200°C, sous atmosphère d'azote pendant 20 minutes :
- 80 parties en poids du polymère de l'Exemple 4,
- 15 parties en poids de la résine formoparacrésolique de l'Exemple 8,
- 3,3 parties en poids de pentaérythritol, et
- 1,7 partie en poids de pentoxyde de phosphore $P_2O_5$ pur.

L'indice d'oxygène limite de cette formulation, mesuré comme précédemment, est reporté au Tableau IV.

EXEMPLE 17

Dans un malaxeur Brabender on mélange à 200°C, sous atmosphère d'azote pendant 20 minutes :
- 75 parties en poids du polymère de l'Exemple 4,
- 16,6 parties en poids de la résine formoparacrésolique de l'Exemple 8,
- 5,6 parties en poids de 1,1,1-tris(hydroxyméthyl)-éthane, et
- 2,8 parties en poids de pentoxyde de phosphore $P_2O_5$ pur.

L'indice d'oxygène limite de cette formulation, mesuré comme précédemment, est reporté au Tableau IV.

EXEMPLE 18

Dans un malaxeur Brabender on mélange à 200°C, sous atmosphère d'azote pendant 20 minutes :
- 75 parties en poids du polymère de l'Exemple 4,
- 12,5 parties en poids de pentaérythritol,
- 12,5 parties en poids de pentoxyde de phosphore $P_2O_5$ pur.

L'indice d'oxygène limite de cette formulation, mesuré comme précédemment, est reporté au Tableau IV.

EXEMPLE 19

On reproduit le mode opératoire de l'Exemple 18 à la seule exception qu'on ajoute au mélange 0,2 partie d'hydrogénocarbonate de sodium. L'indice d'oxygène limite de cette formulation, mesuré comme précédemment, est indiqué au Tableau IV.

EXEMPLE 20

Pour caractériser l'espèce responsable de l'ignifugation dans la composition préparée à l'Exemple 18, on utilise la technique de résonance magnétique nucléaire du proton, du carbone 13 et du phosphore 31 dans un appareil BRUCKER AM 60 à sonde multinoyaux. Le spectre du phosphore 31, relevé à 130°C par rapport à l'acide phosphorique 85% dans le dichloroéthane deutéré, est reproduit sur la Figure 1 en annexe et fait apparaître des déplacements chimiques à - 1 ppm et - 4,5 ppm. Le spectre du proton, relevé à 90°C dans le dichloroéthane deutéré, fait apparaître une bande large à 4 ppm et un pic à 9,8 ppm. Enfin le spectre du carbone 13, relevé dans un mélange de tétrachloroéthane deutéré et de trichlorobenzène, est reproduit sur la Figure 2 en annexe et fait apparaître des déplacements chimiques à 37 ppm, 61 ppm, 66,2 ppm et 71 ppm. L'ensemble des renseignements collectés permet d'écarter la présence des composés :
- 3,9-bis(hydroxy)-2,4,8,10-tétraoxa-3,9-diphosphaspiro[5.5]undécane-3,9-dioxyde dont le spectre du carbone 13 fait apparaître des déplacements chimiques à 37,8 ppm et 70,0 ppm selon Y. HALPERN et al., Ind. Eng. Chem. Prod. Res. Dev. (1984) 23, 235 et dont le spectre du phosphore fait apparaître un déplacement chimique à 3,7 ppm.
- de formule

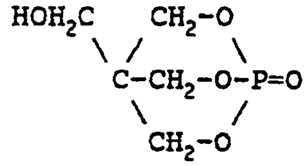

dont le spectre du carbone 13 fait apparaître des déplacements chimiques à 38,8 ppm, 57,7 ppm et 76,4 ppm selon la même référence et dont le spectre du phosphore 31 fait apparaître un déplacement chimique à 5,7 ppm.

Les mesures effectuées permettent de confirmer la seule présence du composé de formule (VI).

## Revendications

**1 -** Composé de phosphore choisi parmi les composés de formules :

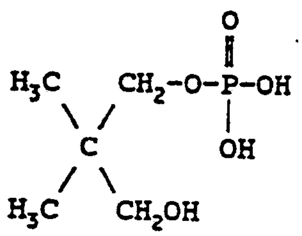

(II),

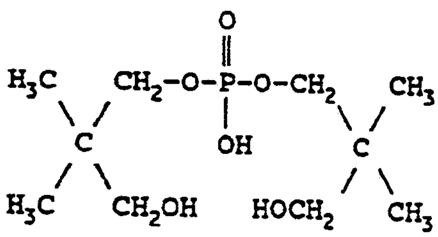

(III),

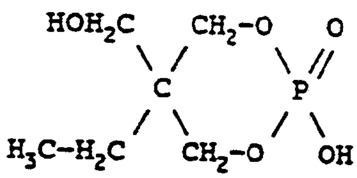

(IV),

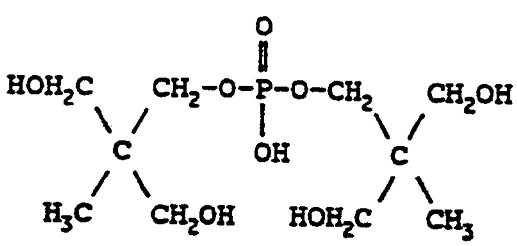

(V), et

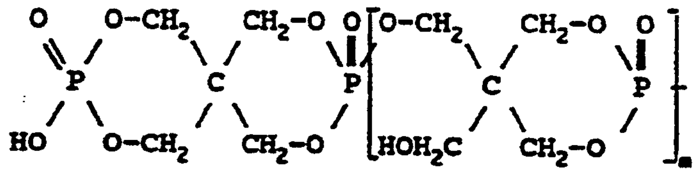 (VI)

dans laquelle m est un nombre entier de 1 à 10.

**2** - Procédé de préparation d'un composé de phosphore par réaction du pentoxyde de phosphore avec un alcool contenant au moins deux fonctions hydroxyles.

**3** - Procédé de préparation selon la revendication 2, caractérisé en ce que la réaction est effectuée à une température de 120° à 180°C pendant une durée de 1 à 20 heures en présence d'une amine tertiaire.

**4** - Procédé de préparation selon l'une des revendications 2 et 3, caractérisé en ce que l'alcool est un diol utilisé à raison d'au moins 3 moles pour une mole de pentoxyde de phosphore.

**5** - Procédé de préparation selon l'une des revendications 2 et 3, caractérisé en ce que l'alcool est un triol utilisé à raison d'au moins 2 moles pour une mole de pentoxyde de phosphore.

**6** - Procédé de préparation selon l'une des revendications 2 et 3, caractérisé en ce que l'alcool contient au moins 4 fonctions hydroxyles et est utilisé à raison d'au moins une mole par mole de pentoxyde de phosphore.

**7** - Procédé de préparation selon la revendication 2, caractérisé en ce que le composé de phosphore est choisi parmi les composés de formules :

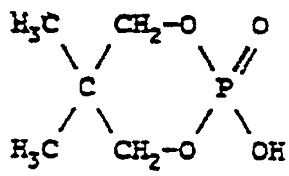 (I),

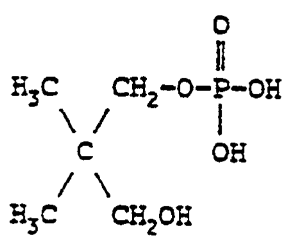 (II),

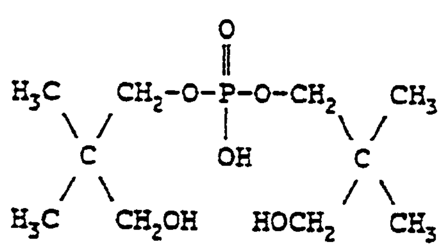 (III),

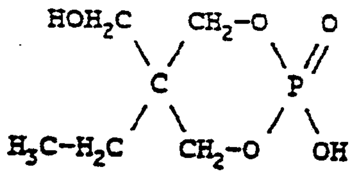

(IV),

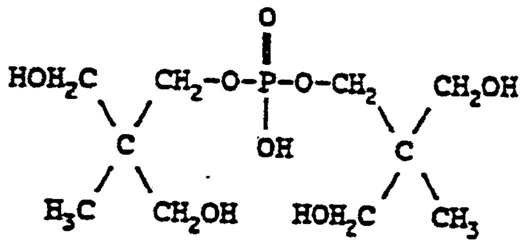

(V), et

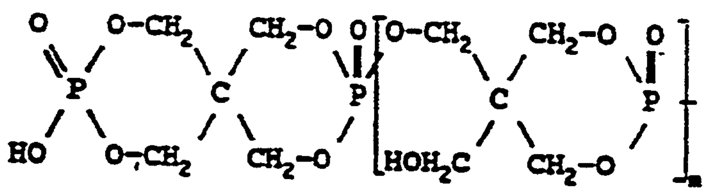

(VI)

dans laquelle m est un nombre entier de 1 à 10.

**8** - Additif d'ignifugation des polymères constitué essentiellement de :

(A) au moins un composé de phosphore choisi parmi ceux obtenus par le procédé selon la revendication 2 et ceux de formules :

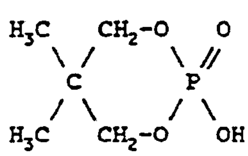

(I),

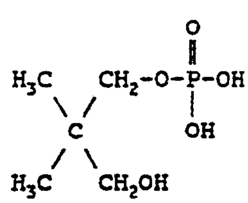

(II),

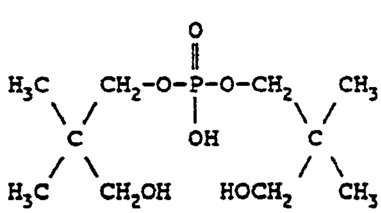

(III),

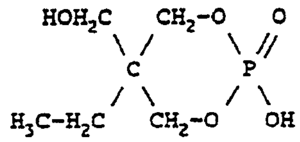 (IV),

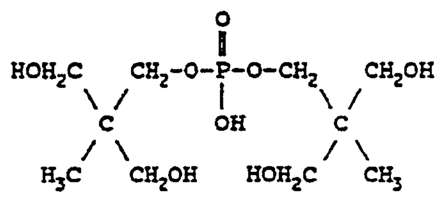 (V), et

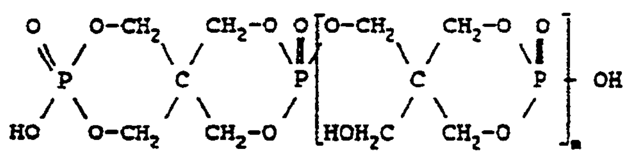 (VI)

dans laquelle m est un nombre entier de 1 à 10 et, pour 100 parties en poids du composé (A),

(B) de 0 à 500 parties en poids d'au moins une résine formoparacrésolique de formule :

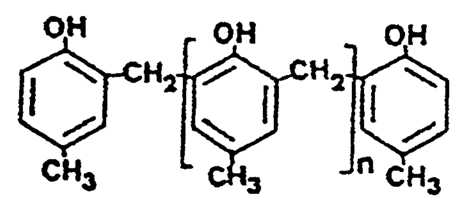 (VII)

dans laquelle n est un nombre entier de 1 à 10, et

(C) de 0 à 1 partie en poids d'hydrogénocarbonate de sodium.

**9** - Composition polymère ignifugée comprenant jusqu'à 40% en poids d'au moins un additif d'ignifugation selon la revendication 7.

**10** - Composition polymère ignifugée selon la revendication 8, caractérisée en ce qu'elle comprend de 15 à 35% en poids de l'additif d'ignifugation.

**11** - Composition polymère ignifugée selon l'une des revendications 8 et 9, caractérisée en ce que la polyoléfine est choisie parmi le polystyrène et les copolymères de styrène et d'un comonomère choisi parmi l'acide méthacrylique, l'anhydride maléique et les maléimides, le polypropylène isotactique, le polybutène-1 et les copolymères cristallins comprenant au moins 85% en moles de propylène et au plus 15% en moles d'éthylène ou d'une α-oléfine possédant de 4 à 12 atomes de carbone, les copolymères d'éthylène et d'au moins une α-oléfine ayant de 3 à 8 atomes de carbone, les copolymères éthylène/ester d'acide insaturé comprenant le cas échéant en outre des motifs dérivés d'un anhydride d'acide dicarboxylique insaturé, d'un monomère glycidylique insaturé, d'un poly(méth)acrylate de polyol et/ou d'un N-carboxyalkylimide d'acide dicarboxylique insaturé, le polyéthylène basse densité radicalaire et les copolymères d'éthylène et d'ester vinylique d'acide carboxylique saturé ayant de 2 à 6 atomes de carbone.

**12** - Procédé de préparation d'une composition polymère ignifugée selon l'une des revendications 8 à 10, consistant à mélanger simultanément, sous atmosphère de gaz inerte, la polyoléfine, le pentoxyde de phosphore, l'alcool contenant au moins deux fonctions hydroxyles et, le cas échéant, la résine formoparacrésolique (B) et/ou l'hydrogénocarbonate de sodium (C), dans un appareil de malaxage à une température au moins égale à la température de fusion de chacun des ingrédients organiques du mélange mais inférieure à la température de décomposition de l'hydrogénocarbonate de sodium et insuffisante pour causer la dégradation pyrolytique du polymère et pendant une durée suffisante pour réaliser "in situ" la réaction entre le pentoxyde de phosphore

et l'alcool.

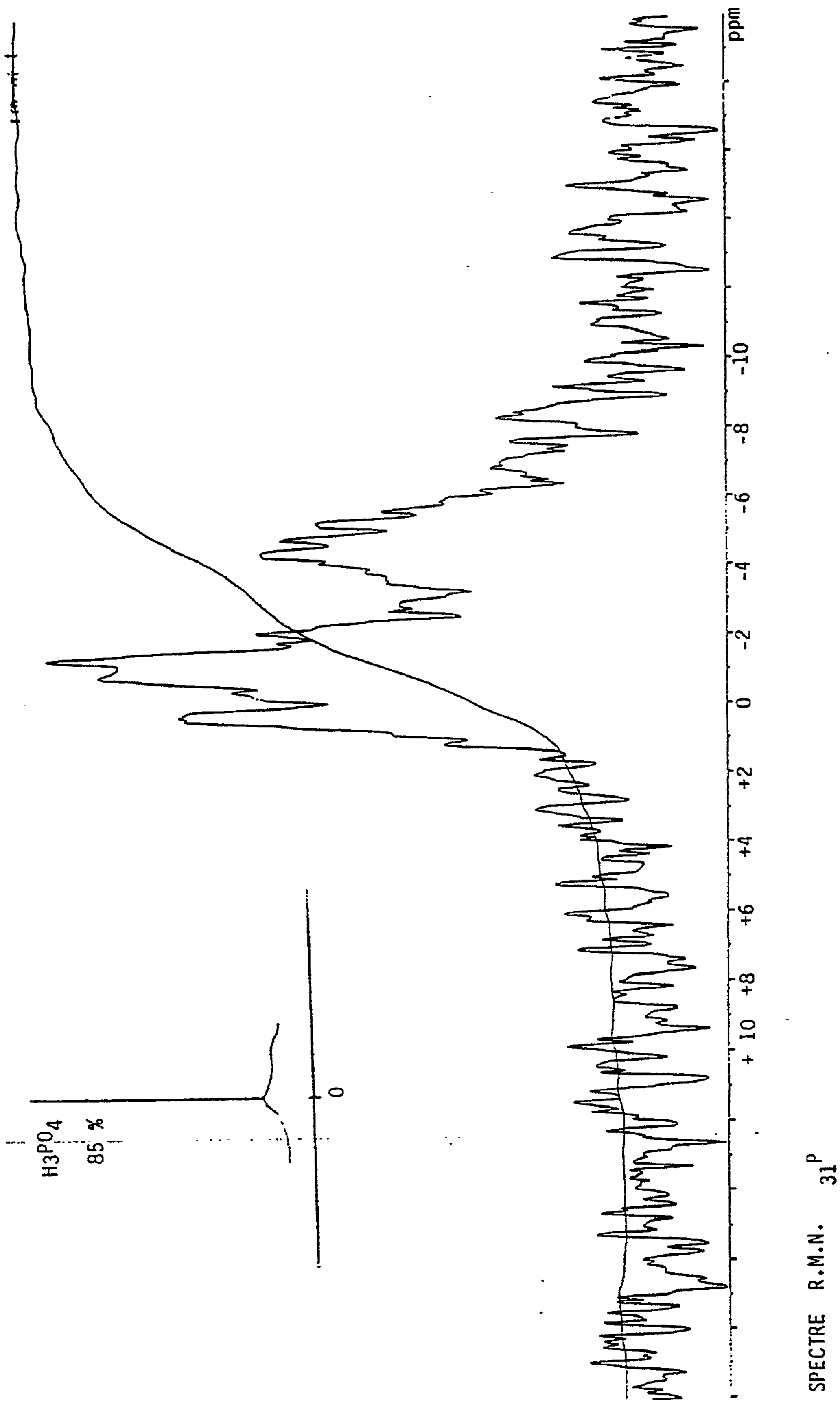


FIGURE 1

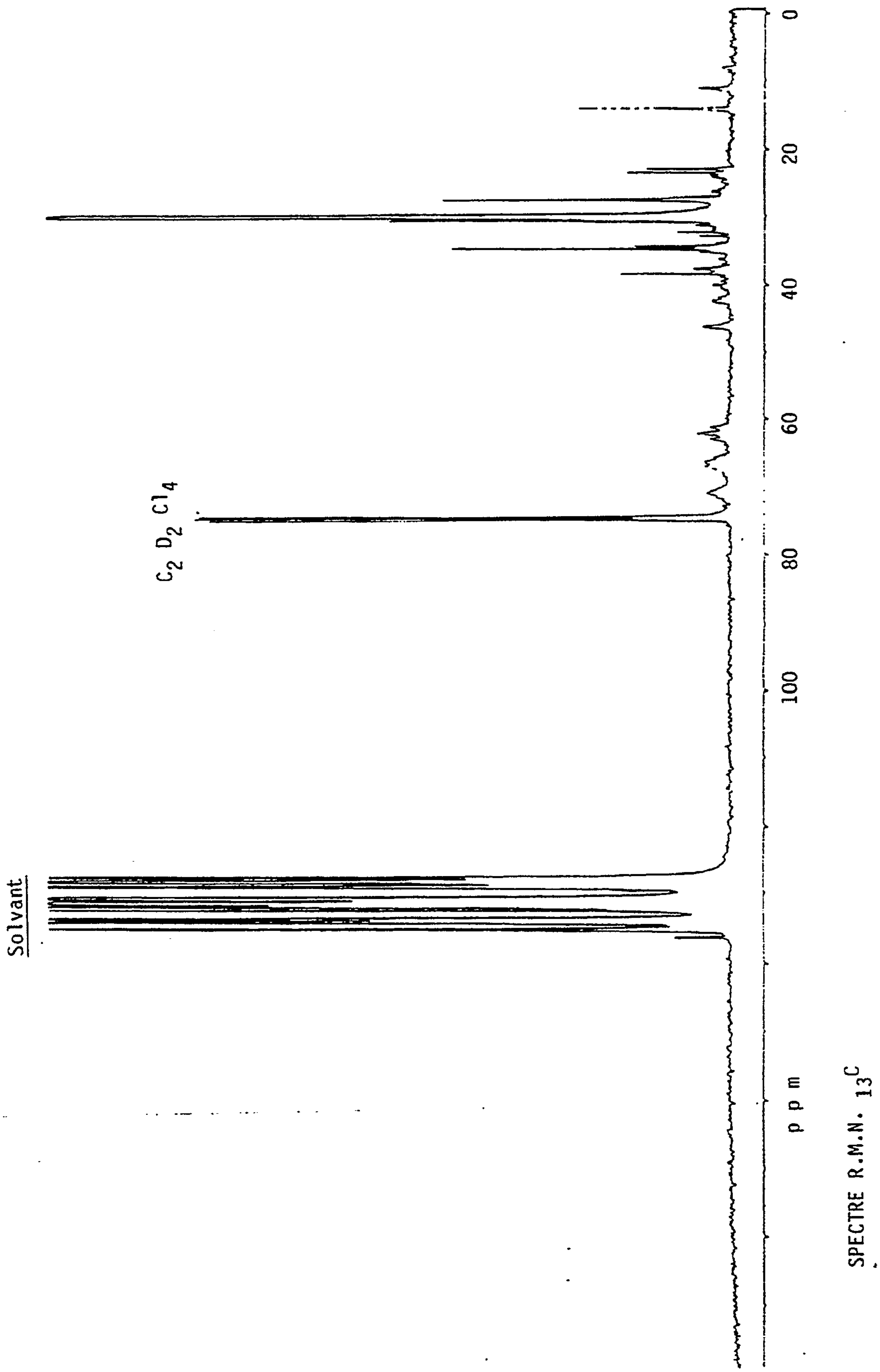


FIGURE 2

Office européen des brevets

# RAPPORT DE RECHERCHE EUROPEENNE

Numero de la demande

EP 91 40 0652

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 054 543 (W. BATOREWICZ)<br>* En entier *<br>----- | 1-12 | C 07 F 9/09<br>C 08 K 5/521<br>C 07 F 9/6574<br>C 08 K 5/527 |
| | | | **DOMAINES TECHNIQUES RECHERCHES (Int. Cl.5)** |
| | | | C 07 F 9/00<br>C 08 K 5/00 |

Le présent rapport a été établi pour toutes les revendications

| Lieu de la recherche | Date d'achèvement de la recherche | Examinateur |
|---|---|---|
| LA HAYE | 27-05-1991 | OUSSET J-B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)